# EUROPÄISCHE PATENTANMELDUNG

(11) **EP 2 282 390 A2**
(43) Veröffentlichungstag der Anmeldung: **09.02.2011**
(21) Anmeldenummer: 10007313.9
(22) Anmeldetag: 15.07.2010
(51) Int. Cl.: H02J 7/00

(54) **Einschaltbare / ausschaltbare Lade-Steckdose zur Aufladung eines Elektroautos**

(30) Priorität: 31.07.2009 DE 102009035627
(71) Anmelder: ABB AG, 68309 Mannheim (DE)
(72) Erfinder: Lange, Manfred, 44229 Dortmund (DE); Wilms, Benjamin, 58802 Balve (DE)

(57) **Zusammenfassung**

Es wird eine einschaltbare / ausschaltbare Lade-Steckdose (1, 2, 3) zur Aufladung eines Elektroautos vorgeschlagen, mit einem Schaltglied (11), welches zwischen Eingangs-Anschlussklemmen (12) und einem mit einem aufzuladenden Fahrzeug (27) zu verbindenden elektrischen Ausgangs-Anschluss (4, 18) eingebunden ist und dessen Steuereingang mit einer Ansteuer-Baukomponente (10) zum Einschalten / Ausschalten der Lade-Steckdose (1, 2, 3) verbunden ist, wobei die Ansteuer-Baukomponente (10) aus einem Funktionselement (30, 34, 35, 36, 37) und einer zugeordneten Auswerte-Nerarbeitungseinheit gebildet ist.

## Beschreibung

Die Erfindung betrifft eine einschaltbare / ausschaltbare Lade-Steckdose zur Aufladung eines Elektroautos.

Führende Autohersteller und Energiekonzerne haben sich auf einen gemeinsamen Fahrzeug-Steckverbinder für Elektroautos mit hierzu korrespondierender elektrischer Kupplung geeinigt (Industrie-Standard), mit dem Fahrzeugbesitzer weltweit die Akkumulatoren ihrer Elektroautos aufladen können.

Der Erfindung liegt die Aufgabe zugrunde, eine Lade-Steckdose zur Aufladung eines Elektroautos mit erweiterten Anwendungsmöglichkeiten anzugeben.

Diese Aufgabe wird erfindungsgemäß gelöst durch eine einschaltbare / ausschaltbare Lade-Steckdose zur Aufladung eines Elektroautos, mit einem Schaltglied, welches zwischen Eingangs-Anschlussklemmen und einem mit einem aufzuladenden Fahrzeug zu verbindenden elektrischen Ausgangs-Anschluss eingebunden ist und dessen Steuereingang mit einer Ansteuer-Baukomponente zum Einschalten / Ausschalten der Lade-Steckdose verbunden ist, wobei die Ansteuer-Baukomponente aus einem Funktionselement und einer zugeordneten Auswerte-/Verarbeitungseinheit gebildet ist.

Die mit der Erfindung erzielbaren Vorteile bestehen insbesondere darin, dass eine unberechtigte Nutzung der Lade-Steckdose unterbunden ist. Über die dem verwendeten Funktionselement zugeordnete Auswerte-/Verarbeitungseinheit erfolgt eine Überprüfung der Nutzungs-Berechtigung, gegebenenfalls ergänzt durch eine Identifizierung des Anwenders. Hierdurch wird es ermöglicht, die durch Nutzung der Lade-Steckdose entstehenden Kosten einem bestimmten Anwender zuzuordnen, was als Grundlage für eine Abrechnung der Kosten herangezogen werden kann.

Zweckmäßige Ausgestaltungen der Erfindung sind in den Unteransprüchen gekennzeichnet.

So können wahlweise ein Funk-Empfänger oder eine Fingerprint-Schnittstelle oder eine Eingabe-Tastatur für einen PIN-Code oder eine Eingabevorrichtung zur Einführung eines Parktickets oder einer EC-Karte oder einer Kreditkarte oder ein Schloss als Funktionselement eingesetzt werden.

Der elektrische Ausgangs-Anschluss kann in Form eines Steckdosen-Gerätesockels zum Einführen eines Steckverbinders eines Lade-Kabels ausgebildet sein, wodurch eine Unterputz-Ausführung sowohl der Lade-Steckdose selbst als auch der Ansteuer-Baukomponente realisierbar ist.

Alternativ kann der elektrische Ausgangs-Anschluss in Form eines innerhalb des Gehäuses der Lade-Steckdose befindlichen und bedarfsweise aus dem Gehäuse herausziehbaren Lade-Kabels inklusive endseitigem Steckverbinder ausgebildet sein. Dabei ergibt sich als erste Möglichkeit, eine automatische Kabelaufwicklung des Lade-Kabels im Gehäuse der Lade-Steckdose vorzusehen und als zweite Möglichkeit, ein Spiralkabel als Lade-Kabel einzusetzen.

Die Erfindung wird nachstehend an Hand der in der Zeichnung dargestellten Ausführungsbeispiele näher erläutert. Es zeigen:
- Fig. 1: eine schematische Darstellung einer einschaltbaren / ausschaltbaren La- de-Steckdose in Unterputz-Ausführung mit einem daran angeschlossenen Fahrzeug (Elektroauto),
- Fig. 2: eine alternative Ausführungsform zur Fig. 1 unter Verwendung einer eine Kabelaufwicklung aufweisenden Lade-Steckdose für Wand- oder Boden- befestigung,
- Fig. 3: eine alternative Ausführungsform zur Fig. 1 unter Verwendung einer ein Spiralkabel aufweisenden Lade-Steckdose für Wand- oder Bodenbefesti- gung,
- Fig. 4 - 8: unterschiedlich ausgebildete Gehäusefronten einer Lade-Steckdose in Unterputz-Ausführung zur Realisierung unterschiedlicher Ansteuer- Baukomponenten zum Einschalten / Ausschalten der Lade-Steckdose.

Die vorgeschlagene Lade-Steckdose eignet sich sowohl für eine Unterputz-Ausführung, als auch für Wandbefestigung, Pfostenbefestigung und Bodenbefestigung. Wesentlich sind dabei die Mittel, welche zielgerichtet ein Einschalten und Ausschalten der Lade-Steckdose ermöglichen und damit eine unberechtigte Nutzung der Lade-Steckdose durch Nichtberechtigte unterbinden. Nachfolgend werden die einzelnen Ausführungsformen näher beschrieben.

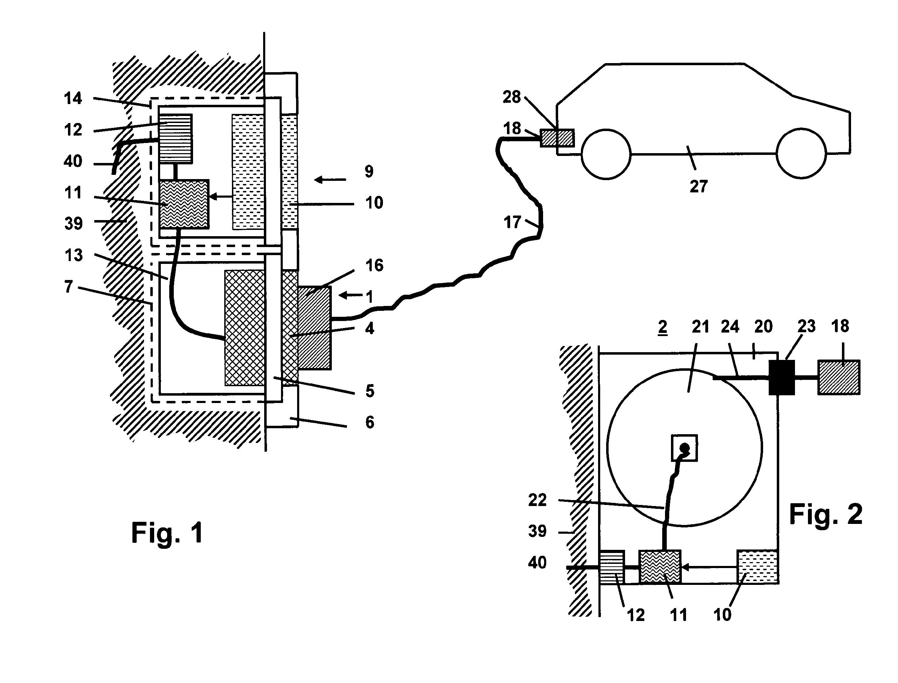

In Fig. 1 ist eine schematische Darstellung einer einschaltbaren / ausschaltbaren Lade-Steckdose in Unterputz-Ausführung mit einem daran angeschlossenen Fahrzeug dargestellt. Es ist eine Wand 39 (z. B. die Wand einer Garage oder eines Carports) mit zwei darin montierten Unterputzdosen 7, 14 (handelsübliche UP-Gerätedosen aus Kunststoff mit 60 mm Durchmesser) zu erkennen,
- wobei in der einen Unterputzdose 7 ein Steckdosen-Gerätesockel 4 (elektrischer Ausgangs-Anschluss) mit elektrischen Kontakten für den Anschluss eines ersten Fahrzeug-Steckverbinders 16 installiert ist, um derart eine Lade-Steckdose 1 in Unterputz-Ausführung zu bilden und
- wobei in der anderen Unterputzdose 14 eine in Form eines Gerätesockels ausgebildete Ansteuer-Baukomponente 10, Eingangs-Anschlussklemmen 12 und ein Schaltglied 11 mit einem Steuereingang installiert sind, um derart eine Ein-/Ausschalt-Baueinheit 9 zu bilden.

Eine Ansteuer-Baukomponente 10 wird dabei durch ein Funktionselement und eine Auswerte-/Verarbeitungseinheit (gegebenenfalls inklusive Speichereinheit) hierzu gebildet, wobei als Funktionselement z. B. ein Funk-Empfänger oder eine Fingerprint-Schnittstelle oder eine Eingabetastatur für einen PIN-Code oder eine Eingabevorrichtung zum Einführen eines Parktickets, einer EC-Karte oder einer Kreditkarte oder ein Schloss eingesetzt werden kann. Die Eingangs-Anschlussklemmen 12 stellen die Verbindung mit einem Anschlusskabel 40 her, über welches die erforderliche Leistung zum Aufladen der Akkumulatoren des Fahrzeuges 27 zur Verfügung gestellt wird. Bei durchgeschaltetem Schaltglied 11 wird diese elektrische Leistung über ein Kabel 13 an die elektrischen Kontakte des Steckdosen-Gerätesockels 4 weitergeleitet. Die Ansteuerung des Schaltgliedes 11 über seinen Steuereingang erfolgt dabei durch die Ansteuer-Baukomponente 10 in einer nachfolgend näher beschriebenen Weise.

Lade-Steckdose 1 und Ein-/Ausschalt-Baueinheit 9 weisen jeweils eine Zentralscheibe 5 auf und sind in einem gemeinsamen Abdeckrahmen 6 (im einfachsten Fall ein Zweifach-Rahmen für senkrechte oder waagrechte Montage) integriert, so dass eine formschöne Einbindung / Integration in ein Installationsgeräte-Programm respektive Schalter- und Steckdosenprogramm sowie eine Kombination mit weiteren Geräten, beispielsweise Schaltern / Tastern / Dimmern / Steckdosen dieses Schalter- und Steckdosenprogramms möglich ist.

Zum Aufladen der Akkumulatoren eines Fahrzeuges 27 wird ein Lade-Kabel 17 mit seinem ersten Fahrzeug-Steckverbinder 16 in den Steckdosen-Gerätesockel 4 und mit seinem zweiten Fahrzeug-Steckverbinder 18 in eine am Fahrzeug 27 befestigte, korrespondierend hierzu ausgebildete elektrische Kupplung 28 eingesteckt.

Beim Fahrzeug-Steckverbinder 18 und der korrespondierenden elektrischen Kupplung 28 handelt es sich vorteilhaft um standardisierte Komponenten (Industrie-Standard), wodurch es ermöglicht wird, dass die Akkumulatoren eines Fahrzeugs (Elektroautos) in schneller Art und Weise aufgeladen werden können, ohne dass dabei Adapter eingesetzt werden müssten. Die Ladespannung liegt im Bereich 400 V (vorzugsweise Dreiphasenwechselstrom) und die Stromstärke kann bis 63 A betragen.

An die elektrische Kupplung sind die Akkumulatoren des Fahrzeuges über einen Gleichrichter angeschlossen. Die Aufladung der Akkumulatoren selbst erfolgt vorzugsweise in geregelter Art und Weise über eine entsprechende Steuer- /Regelvorrichtung, welche in Form eines separaten Gerätes ausgebildet oder Teilkomponente eines Fahrzeug-Rechners sein kann.

In Fig. 2 ist eine alternative Ausführungsform zur Fig. 1 unter Verwendung einer eine Kabelaufwicklung aufweisenden Lade-Steckdose für Wand- oder Bodenbefestigung dargestellt. Die z. B. an der Wand 39 montierte Lade-Steckdose 2 besitzt im Innenraum ihres Gehäuses 20 eine automatische Kabelaufwicklung 21 mit einem darauf aufrollbaren respektive davon abrollbaren Lade-Kabel 24, welches über eine Kabel-Durchführung 23 aus dem Gehäuse 20 geführt wird und endseitig den zweiten Fahrzeug-Steckverbinder 18 (elektrischer Ausgangs-Anschluss) aufweist.

Die automatische Kabelaufwicklung 21 ist mit ihrem weiteren Ende über ein Kabel 22 mit dem Schaltglied 11 verbunden, welches die Verbindung mit den Eingangs-Anschlussklemmen 12 und damit mit dem Anschlusskabel 40 herstellt. Die Ansteuerung des Schaltglieds 11 über dessen Steuereingang erfolgt mittels der an der Frontseite des Gehäuses 20 zugänglichen Ansteuer-Baukomponente 10 mit Funktionselement und Auswerte-/Verarbeitungseinheit (gegebenenfalls mit Speicherelement).

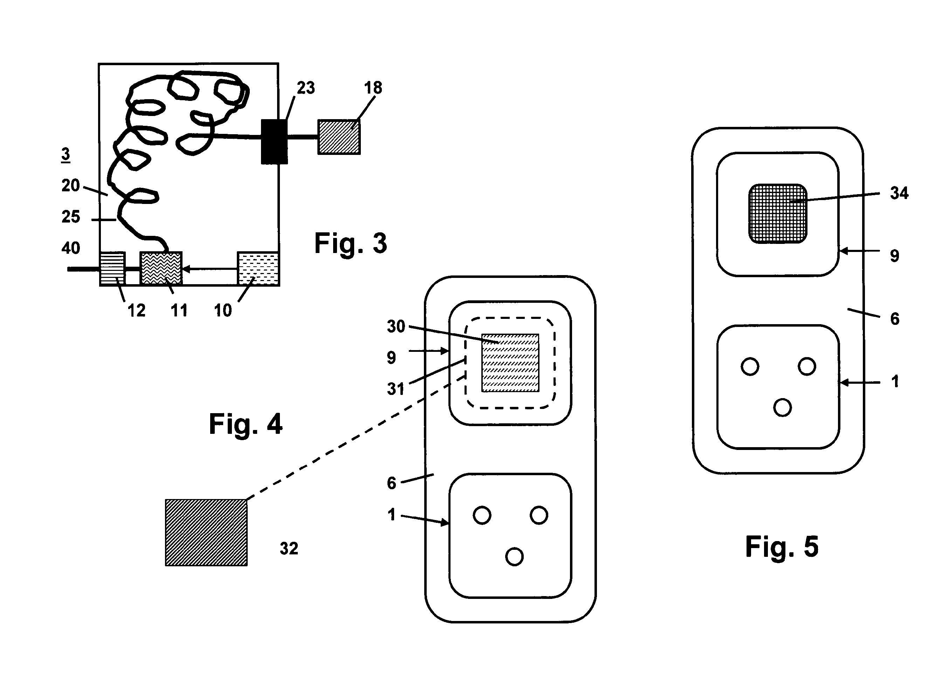

In Fig. 3 ist eine alternative Ausführungsform zur Fig. 1 unter Verwendung einer ein Spiralkabel aufweisenden Lade-Steckdose für Wand- oder Bodenbefestigung dargestellt. Bei dieser Lade-Steckdose 3 wird die automatische Kabelaufwicklung 21 durch ein Spiralkabel 25 ersetzt, welches sich im "Ruhezustand", bei welchem kein Fahrzeug geladen wird, innerhalb des Gehäuses 20 befindet und welches über die Kabel-Durchführung 23 aus dem Gehäuse 20 gezogen werden kann, um derart den Anschluss des zweiten Fahrzeug-Steckverbinders 18 (elektrischer Ausgangs-Anschluss) an der korrespondierenden Kupplung 28 des Fahrzeuges 27 zu ermöglichen. Das weitere Ende des als Lade-Kabel dienenden Spiralkabels 25 ist mit dem Schaltglied 11 verbunden, welches die Verbindung mit den Eingangs-Anschlussklemmen 12 und damit mit dem Anschlusskabel 40 herstellt. Die Ansteuerung des Schaltglieds 11 über dessen Steuereingang erfolgt mittels der an der Frontseite des Gehäuses 20 zugänglichen Ansteuer-Baukomponente 10 mit Funktionselement und Auswerte-Nerarbeitungseinheit (gegebenenfalls mit Speicherelement).

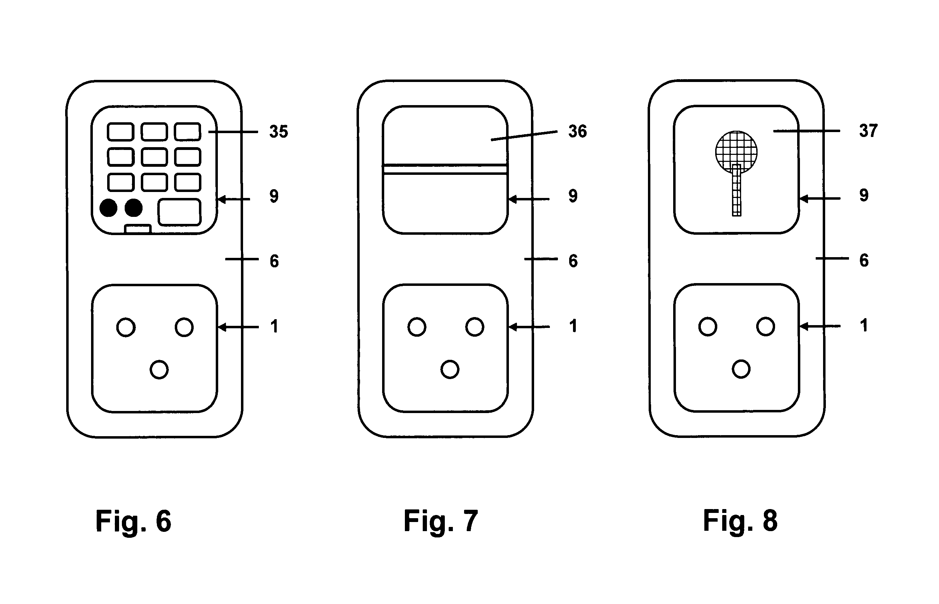

In den Figuren 4 - 8 sind unterschiedlich ausgebildete Gehäusefronten einer Lade-Steckdose in Unterputz-Ausführung zur Realisierung unterschiedlicher Ansteuer-Baukomponenten zum Einschalten / Ausschalten der Lade-Steckdose dargestellt. Für eine Ansteuer-Baukomponente 10 der Ein-/Ausschalt-Baueinheit 9 können insbesondere folgende Funktionselemente eingesetzt werden:
- ein Funk-Empfänger 30 in Verbindung mit einer z. B. im Gerätesockel oder in der zugeordneten Zentralscheibe 5 oder im zugeordneten Abdeckrahmen 6 integrierten Antenne 31, wobei die Ansteuerung dieses Funk-Empfängers 30 mittels eines in einer Fernbedienung integrierten, separaten Funk-Senders 32 erfolgt, wie in Fig. 4 gezeigt,
- eine Fingerprint-Schnittstelle 34 (Fingerprint-Funktionselement, Finger-Scanner als Lesegerät) als biometrisches System, wie in Fig. 5 gezeigt,
- eine Eingabetastatur 35 (Pin-Code-Funktionselement) zur händischen Eingabe eines PIN-Codes, d. h. einer vorgegebene Ziffernfolge, wie in Fig. 6 gezeigt,
- eine Eingabevorrichtung 36 zum Einführen eines Parktickets oder einer EC-Karte oder einer Kreditkarte, wie in Fig. 7 gezeigt,
- ein Schloss 37 zum Einführen eines Hotelschlüssels oder Hausschlüssels, wie in Fig. 8 gezeigt.

Dabei sind die vorstehend erwähnten Funktionselemente, wie Funk-Empfänger 30 oder Fingerprint-Schnittstelle 34 oder Eingabetastatur 35 oder Eingabevorrichtung 36 oder Schloss 37, an eine zugeordnete Auswerte-Nerarbeitungseinheit angeschlossen, welche die empfangenen / eingegebenen Informationen (Signale) bearbeitet und überprüft, wobei die erforderlichen Prüfkriterien / Identifizierungskriterien, wie z. B. ein digitaler Fingerabdruck oder ein Zahlencode, in einem zugeordneten, mit der Auswerte-Nerarbeitungseinheit verbundenen Speicher eingegeben und dauerhaft abgespeichert sind. Dementsprechend kann eine Überprüfung durch Vergleich von abgespeicherten Informationen mit den aktuell erhaltenen Informationen erfolgen.

Bei der Ausführungsform gemäß Fig. 4 mit Funk-Empfänger 30 können z. B. Bluetooth® -fähige Geräte, wie insbesondere auch Mobiltelefone als Schlüssel, vergleichbar einem Haustürschlüssel, eingesetzt werden. Dabei wird das lizenzfreie und zulassungsfreie ISM-Band (Industrial, Scientific and Medical Band) zwischen 2,402 GHz und 2,480 GHz verwendet. Jedes Bluetooth ® -fähige Gerät identifiziert sich über eine individuelle und unverwechselbare 48 bit lange Seriennummer. Eine Authentifizierung erfolgt unter Einsatz des Funk-Empfängers 30 (Funktionselement) in Verbindung mit der erwähnten Auswerte-/Verarbeitungseinheit inklusive zugeordnetem Speicher. Bluetooth® ist eine eingetragene Wort-Bildmarke der Bluetooth SIG, Inc., Bellevue Wash., US.

In ähnlicher Art und Weise wie die Bluetooth® -Schnittstelle können eine WLAN-Schnittstelle (Wireless Local Area Network), eine RFID-Schnittstelle (Radio Frequency Identification), eine GSM-Schnittstelle (Global System for Mobile Telecommunication) oder eine DECT-Schnittstelle (Digital Enhanced (European) Cordless Telephone) als Funktionselemente eingesetzt werden.

Dabei besteht prinzipiell die Möglichkeit, den Funk-Empfänger 30 auf den Funk-Sender 32 anzulernen, wodurch z. B. der bereits in einem elektronischen Fahrzeug-Schlüssel (Funk-Fahrzeug-Schlüssel) integrierte Sender verwendbar ist, d. h. der anlernbare Funk-Empfänger 30 weist die gleiche Kodierung wie der Fahrzeug-Schlüssel auf. Es ist ein Automatismus vorgebbar, nach welchem nach Parken des Fahrzeuges und Anschluss des Lade-Kabels 17 respektive 24 oder 25 der Ladevorgang automatisch beginnt, sobald das Fahrzeug mittels des elektronischen Fahrzeug-Schlüssels abgeschlossen wird.

Die Ausführungsform gemäß Fig. 7 eignet sich z. B. für Parkhäuser, um derart den Aufladeprozess über ein Parkticket einzuschalten / auszuschalten und eine entsprechende Verrechnung zu ermöglichen. In ähnlicher Art und Weise eignet sich diese Ausführungsform, um den Aufladeprozess über eine EC-Karte oder Kreditkarte einzuschalten / auszuschalten und eine entsprechende Verrechnung zu ermöglichen.

Die Ausführungsform gemäß Fig. 8 eignet sich z. B. für Hotels, um derart den Aufladeprozess über den Hotelschlüssel einzuschalten / auszuschalten und eine entsprechende Verrechnung zu ermöglichen.

Bei allen Ausführungsformen gemäß den Figuren 4 - 8 ist außer der Ein-/Ausschalt-Baueinheit 9 jeweils die Lade-Steckdose 1 sowie der Abdeckrahmen 6 gezeigt. Selbstverständlich sind auch die Lade-Steckdosen 2, 3 in analoger Weise ausgerüstet.

### Bezugszeichenliste

- 1: Lade-Steckdose in Unterputz-Ausführung
- 2: Lade-Steckdose für Wand- oder Bodenbefestigung
- 3: Lade-Steckdose für Wand- oder Bodenbefestigung (Spiralkabel)
- 4: Steckdosen-Gerätesockel für den Anschluss des ersten Fahrzeug- Steckverbinders (elektrischer Ausgangs-Anschluss)
- 5: Zentralscheibe
- 6: Abdeckrahmen
- 7: Unterputzdose
- 8: -
- 9: Ein-/Ausschalt-Baueinheit
- 10: Ansteuer-Baukomponente (Funktionselement + Auswerte- Nerarbeitungseinheit)
- 11: Schaltglied mit Steuereingang
- 12: Eingangs-Anschlussklemmen
- 13: Kabel
- 14: Unterputzdose
- 15: -
- 16: erster Fahrzeug-Steckverbinder
- 17: Lade-Kabel
- 18: zweiter Fahrzeug-Steckverbinder (elektrischer Ausgangs-Anschluss)
- 19: -
- 20: Gehäuse
- 21: automatische Kabelaufwicklung
- 22: Kabel
- 23: Kabel-Durchführung
- 24: Lade-Kabel
- 25: Spiralkabel als Lade-Kabel
- 26: -
- 27: Fahrzeug
- 28: elektrische Kupplung zur Aufnahme des Fahrzeug-Steckverbinders
- 29: -
- 30: Funk-Empfänger
- 31: Antenne
- 32: Funk-Sender (Sender des Fahrzeugschlüssels, Bluetooth®, WLAN, RFID, GSM, DECT)
- 33: -
- 34: Fingerprint-Schnittstelle
- 35: Eingabetastatur (für PIN-Code)
- 36: Eingabevorrichtung (für Parkticket, EC-Karte, Kreditkarte)
- 37: Schloss (für Hotelschlüssel, Hausschlüssel)
- 38: -
- 39: Wand
- 40: Anschlusskabel

## Patentansprüche

1. Einschaltbare / ausschaltbare Lade-Steckdose (1, 2, 3) zur Aufladung eines Elektroautos, mit einem Schaltglied (11), welches zwischen Eingangs-Anschlussklemmen (12) und einem mit einem aufzuladenden Fahrzeug (27) zu verbindenden elektrischen Ausgangs-Anschluss (4, 18) eingebunden ist und dessen Steuereingang mit einer Ansteuer-Baukomponente (10) zum Einschalten / Ausschalten der Lade-Steckdose (1, 2, 3) verbunden ist, wobei die Ansteuer-Baukomponente (10) aus einem Funktionselement (30, 34, 35, 36, 37) und einer zugeordneten Auswerte-/Verarbeitungseinheit gebildet ist.

2. Einschaltbare / ausschaltbare Lade-Steckdose (1, 2, 3) nach Anspruch 1, **gekennzeichnet durch** einen Funk-Empfänger (30) als Funktionselement.

3. Einschaltbare / ausschaltbare Lade-Steckdose (1, 2, 3) nach Anspruch 2, **dadurch gekennzeichnet, dass** der Funk-Empfänger (30) auf einen bestimmten Funk-Sender (32), insbesondere auf einen in einem Funk-Fahrzeug-Schlüssel integrierten Sender, anlernbar ist.

4. Einschaltbare / ausschaltbare Lade-Steckdose (1, 2, 3) nach Anspruch 1, **gekennzeichnet durch** eine Fingerprint-Schnittstelle (34) als Funktionselement.

5. Einschaltbare / ausschaltbare Lade-Steckdose (1, 2, 3) nach Anspruch 1, **gekennzeichnet durch** eine Eingabe-Tastatur (35) für einen PIN-Code als Funktionselement.

6. Einschaltbare / ausschaltbare Lade-Steckdose (1, 2, 3) nach Anspruch 1, **gekennzeichnet durch** eine Eingabevorrichtung (36) zur Einführung eines Parktickets oder einer EC-Karte oder einer Kreditkarte als Funktionselement.

7. Einschaltbare / ausschaltbare Lade-Steckdose (1, 2, 3) nach Anspruch 1, **gekennzeichnet durch** ein Schloss (37) als Funktionselement.

8. Einschaltbare / ausschaltbare Lade-Steckdose (1) nach einem der vorstehenden Ansprüche, **gekennzeichnet durch** einen Steckdosen-Gerätesockel (4) als elektrischer Ausgangs-Anschluss zum Einführen eines Steckverbinders (16) eines Lade-Kabels (17).

9. Einschaltbare / ausschaltbare Lade-Steckdose (1) nach Anspruch 8, **gekennzeichnet durch** eine Unterputz-Ausführung sowohl der Lade-Steckdose (1) selbst als auch der Ansteuer-Baukomponente (10).

10. Einschaltbare / ausschaltbare Lade-Steckdose (2, 3) nach einem der Ansprüche 1 - 7, **gekennzeichnet durch** ein innerhalb des Gehäuses (20) der Lade-Steckdose befindliches und bedarfsweise aus dem Gehäuse herausziehbares Lade-Kabel (24, 25) inklusive endseitigem Steckverbinder (18) als elektrischer Ausgangs-Anschluss.

11. Einschaltbare / ausschaltbare Lade-Steckdose (2) nach Anspruch 10, **gekennzeichnet durch** eine automatische Kabelaufwicklung (21) des Lade-Kabels (24).

12. Einschaltbare / ausschaltbare Lade-Steckdose (3) nach Anspruch 10, **gekennzeichnet durch** ein Spiralkabel (25) als Lade-Kabel.
